# EUROPÄISCHE PATENTSCHRIFT

(11) **EP 1 477 363 B1**
(45) Veröffentlichungstag und Bekanntmachung des Hinweises auf die Patenterteilung: **07.11.2007**
(21) Anmeldenummer: 04010326.9
(22) Anmeldetag: 30.04.2004
(51) Int. Cl.: B60Q 1/42

(54) **Rückstelleinrichtung für einen Blinkerschalthebel**
Return device for a turn signal lever
Dispositif de rappel pour levier de commande d'indicateur de direction

(30) Priorität: 13.05.2003 DE 10321408
(43) Veröffentlichungstag der Anmeldung: 17.11.2004
(73) Patentinhaber: Valeo Schalter und Sensoren GmbH, 74321 Bietigheim-Bissingen (DE)
(72) Erfinder: Simonis, Karl, 75428 Illingen (DE); Hecht, Walter, 74321 Bietigheim-Bissingen (DE); Lipfert, Rainer, 74076 Heilbronn (DE)
(74) Vertreter: Bulling, Alexander

(56) Entgegenhaltungen:
- DE-A1- 10 037 585
- DE-A1- 10 037 586
- US-A- 3 300 601

## Beschreibung

Die Erfindung betrifft eine Rückstelleinrichtung zur Rückstellung eines Blinkerschalthebels einer Lenkstockschaltervorrichtung von einer Schaltstellung in eine Ausgangsstellung, mit einem schalthebelseitigen, um eine Schwenkachse verschwenkbaren, Halteabschnitte aufweisenden Mitnehmer, mit wenigstens einer mit den Halteabschnitten zusammenwirkenden, gehäuseseitigen Anlagekontur, wobei die Anlagekontur Rückhaltebereiche für die Halteabschnitte aufweist, mit Rückstellmitteln, die zur Rückstellung des Schalthebels den jeweiligen Halteabschnitt aus dem jeweiligen Rückhaltebereich auslösen, und mit einem um eine Auslöseachse auslenkbaren Auslösefinger, der von einem lenkradseitigen Nocken betätigbar ist und die Rückstellmittel betätigt.

Aus der DE 100 37 586 A1 ist eine Rückstelleinrichtung bekannt geworden, bei der die Bewegung des Auslösefingers auf Sperrtüren übertragen wird. Die Sperrtüren sind über eine recht aufwändige Mechanik, die verschiedene Kipphebel aufweist, mit dem Auslösefinger bewegungsgekoppelt. Ein Auslenken des Auslösefingers führt zu einem Aufschwenken der Sperrtüren, wodurch die Halteabschnitte freigegeben werden und ein Rückstellen des Lenkschalthebels erfolgt.

Aus der DE 25 53 009 U ist eine Rückstelleinrichtung bekannt geworden, die vergleichsweise viel Bauraum beansprucht. Gerade im Bereich der Lenkstockschaltervorrichtungen ist bei modernen Kraftfahrzeugen eine Vielzahl von Schaltereinheiten und Sensoren vorhanden, so dass sehr beengte Platzverhältnisse vorherrschen.

Aus der DE 100 37 585 ist ein gattungsgemäße Rückstelleinrichtung gemäß dem Oberbegriff des Anspruchs 1 bekannt.

Der vorliegenden Erfindung liegt deshalb die Aufgabe zugrunde, eine Rückstelleinrichtung der eingangs beschriebenen Art dahingehend weiterzubilden, dass sie zum einen sehr kompakt baut und zum anderen dauerhaft funktionssicher arbeitet.

Diese Aufgabe wird durch eine eingangs genannte Rückstelleinrichtung dadurch gelöst, dass die Rückstellmittel ein mit dem Auslösefinger gekoppeltes, von einer Mittellage aus in zwei Auslöselagen verschiebbar angeordnetes Schiebeelement umfasst, das in der einen Auslöselage den einen und in der anderen Auslöselage den anderen Halteabschnitt aus dem jeweiligen Rückhaltebereich auslöst. Durch Vorsehen eines Schiebeelements, das in zwei Auslöselagen verschiebbar ist, kann insbesondere im Vergleich zur DE 100 37 586 A1 eine Bauteilreduzierung erreicht werden. Mit lediglich einem Bauteil, nämlich dem Schiebeelement, wird je nach Bewegungsrichtung des Auslösefingers der jeweilige Halteabschnitt ausgelöst.

Vorteilhafterweise kann die Verschiebung des Schiebeelements in die beiden Auslöselagen wenigstens weitgehend senkrecht zu einer die Schwenkachse schneidenden Radiuslinie der Lenkspindelachse erfolgen. Eine derartige Anordnung hat den Vorteil, dass die Bewegung des Auslösefingers so auf das Schiebeelement übertragen wird, dass es einen möglichst großen Weg zurücklegt. Dadurch kann eine gezielte und funktionssichere Auslösung der Halteabschnitte erreicht werden.

Zur Bewegungskopplung des Auslösefingers und des Schiebeelements kann vorgesehen sein, dass der Auslösefinger eine entlang seiner Längsachse verlaufende, mittig angeordnete Längsführung aufweist, in die ein schiebeelementseitiger Zapfen ragt. Über den Zapfen wird das Schiebeelement je nach Betätigung des Auslösefingers aus seiner Mittellage in die jeweilige Auslöselage verschoben. Zur exakten Führung des Schiebeelements kann das Schiebeelement in einer Nut, Kulisse oder dergleichen geführt sein.

Vorteilhafterweise ist erfindungsgemäß denkbar, dass der Auslösefinder durch ein Federelement in zur Lenkspindelachse radialer Richtung federbeaufschlagt so angeordnet ist, dass der Auslösefinger gegenüber dem Zapfen entlang seiner Längsführung verschiebbar ist. Dadurch kann erreicht werden, dass der Auslösefinger nur dann in den Kontaktbereich mit dem lenkradseitigen Nocken gerät, wenn der Blinkerschalthebel betätigt wird. Dazu kann der Auslösefinger beispielsweise im Bereich seiner Auslöseachse in einer auf einer Radiuslinie der Lenkspindelachse liegenden Nut verschiebbar angeordnet sein.

Vorteilhafterweise ist das Federelement als einfach gebogenes Federstahlband oder als einfach gebogener Federstahldraht ausgebildet. Ein derartiges Federelement kann beispielsweise um cirka 180° gebogen sein und den Auslösefinger senkrecht zu seiner Auslöseachse in radialer Richtung hin zur Lenkspindelachse beaufschlagen. Ein derartiges Federelement kann folglich in radialer Richtung der Lenkspindelachse sehr kompakt bauen. Dadurch kann die gesamte Rückstelleinrichtung in radialer Richtung vergleichsweise klein gehalten werden.

Erfindungsgemäß ist weiterhin vorteilhaft, wenn das dem Federelement zugewandte Ende des Auslösefingers in einer gehäuseseitigen Nut geführt wird. Die Nut verläuft hierbei vorteilhafterweise auf der Radiuslinie der Lenkspindelachse. Die Nut nimmt vorteilhafterweise eine die Auslöseachse aufweisenden Zapfenabschnitt des Auslösefingers auf. Der parallel zur Lenkspindelachse verlaufende Zapfenabschnitt greift dabei vorteilhafterweise in die Nut ein.

Zur Rückführung des Schiebeelements in seine Ausgangslage nach dem Rückstellen des Schalthebels kann erfindungsgemäß vorgesehen sein, dass das Schiebeelement mit einer Ausgleichsfeder gekoppelt ist. Die Ausgleichsfeder ist vorteilhafterweise in Form einer Schraubenfeder ausgebildet, die unter axialer Vorspannung in einer gehäuseseitigen Federaufnahme gehalten wird, wobei das Schiebeelement zwei die Stirnseiten der Schraubenfeder über- und/oder umgreifende Federanlageabschnitte aufweist. Die Ausgleichsfeder ist dabei vorteilhafterweise quer zur Lenkspindelachse angeordnet. Beim Verschieben des Schiebeelements in die eine Richtung wird folglich eine Stirnseite der Schraubenfeder beaufschlagt; beim Verschieben des Schiebeelements in die andere Richtung, die andere Stirnseite. Dadurch wird gewährleistet, dass das Schiebeelement in der Ausgangsstellung des Schalthebels stets mittig angeordnet ist.

Eine bevorzugte Ausführungsform der Erfindung sieht vor, dass das Schiebeelement entlang einer geraden Linie verschiebbar angeordnet ist, wobei die gerade Linie senkrecht zur Verbindungslinie der Lenkspindelachse mit der Schwenkachse verläuft.

Allerdings ist erfindungsgemäß auch denkbar, dass das Schiebeelement entlang einer Kreisbahn verschiebbar angeordnet sein kann, wobei der Mittelpunkt der Kreisbahn im Bereich der Lenkspindelachse oder auf einer Radiuslinie der Lenkspindelachse im Bereich zwischen der Lenkspindelachse und dem Schiebeelement liegt. Je nach Wahl des Mittelpunkts der Kreisbahn kann eine entsprechende Auslenkung des Schiebeelements erreicht werden, wodurch ein Auslösen bewirkt werden kann.

Vorteilhafterweise wirkt das Schiebelement zum Auslösen des jeweiligen Halteabschnitts unmittelbar gegen den jeweiligen Halteabschnitt. Dies hat den Vorteil, dass im Vergleich zu bekannten Rückstelleinrichtungen eine Bauteilreduzierung erreicht wird.

Dabei ist vorteilhaft, wenn die Rückhaltebereiche der Anlagekontur in Form von Rückhalteausbuchtungen ausgebildet sind und wenn das Schiebeelement den jeweiligen Halteabschnitt in der Auslöselage aus der jeweiligen Rückhalteausbuchtung heraushebt. Ein besonders positives Schaltverhalten ergibt sich dann, wenn die Abschnitte des Schiebeelements, die den jeweiligen Halteabschnitt aus der jeweiligen Rückhalteausbuchtung herausheben, in der Auslöselage tangential an die Anlagekontur angrenzen und/oder tangential in die Anlagekontur übergehen.

Eine andere Ausführungsform der Erfindung sieht vor, dass das Schiebeelement zum Auslösen des jeweiligen Halteabschnitts unmittelbar gegen eine den jeweiligen Halteabschnitt im jeweiligen Rückhaltebereich haltende Sperrtüre wirkt und diese auslenkt. Zwar weist diese Ausführungsform zusätzliche Bauteile in Form von Sperrtüren auf. Die Sperrtüren haben allerdings den Vorteil, dass sie so bewegt werden können, dass eine geringe, aber präzise Auslenkung ausreicht, um die Halteabschnitte auszulösen.

Dabei ist vorteilhafterweise denkbar, dass das Schiebeelement mit der jeweiligen Sperrtüre über eine schiebeelementseitige Kulissenbahn und einen sperrtürenseitigen, in der Kulissenbahn laufenden Führungszapfen bewegungsgekoppelt sind. Dadurch kann insbesondere eine geradlinige Bewegung des Schiebeelements in eine Schwenkbewegung der Sperrtüren umgelenkt werden.

Die Längsachse der Kulissenbahn kann hierbei derart geknickt verlaufen, dass der Führungszapfen der jeweiligen Sperrtüre in der Auslöselage die jeweilige Sperrtüre auslenkt. Hierdurch kann ein sehr genaues und präzises Schaltverhalten und Rückstellen realisiert werden.

Ferner kann erfindungsgemäß vorgesehen sein, dass die Abschnitte der Kulissenbahnen, in denen die Führungszapfen in der Mittellage des Schiebeelements angeordnet sind, senkrecht zu einer die Schwenkachse schneidenden Radiuslinie der Lenkspindelachse verlaufen. Um ein präzises Schaltverhalten zu ermöglichen, kann ferner vorgesehen sein, dass die Halteabschnitte entlang je einer Radiuslinie der Schwenkachse gegen die jeweilige Anlagekontur federbeaufschlagt wirken, wobei diese beiden Radiuslinien einen Winkel im Bereich von 90° bis 135° einschließen. Durch das Vorsehen eines derartigen Winkels baut die erfindungsgemäße Rückstelleinrichtung vergleichsweise klein.

Weitere Einzelheiten und vorteilhafte Ausgestaltungen der Erfindung sind der folgenden Beschreibung zu entnehmen, in der die Erfindung anhand der in der Zeichnung dargestellten Ausführungsbeispiele näher beschrieben und erläutert ist.

Es zeigen:
Figur 1 die Draufsicht auf eine erste erfindungsgemäße Rückstelleinrichtung;
Figur 2 die Unteransicht der Rückstelleinrichtung gemäß Figur 1;
Figur 3 die Rückstelleinrichtung gemäß Figur 1 in Draufsicht in Schaltstellung;
Figur 4 eine perspektivische Unteransicht der Schaltstellung gemäß Figur 3;
Figur 5 die Schaltstellung gemäß Figur 3 beim Auslösen;
Figur 6 die Draufsicht auf eine zweite erfindungsgemäße Rückstelleinrichtung;
Figur 7 die Unteransicht der Rückstelleinrichtung gemäß Figur 6;
Figur 8 die Rückstelleinrichtung gemäß Figur 6 in Schaltstellung;
Figur 9 und 10 das Auslösen der Schaltstellung gemäß Figur 8 in verschiedenen Ansichten.

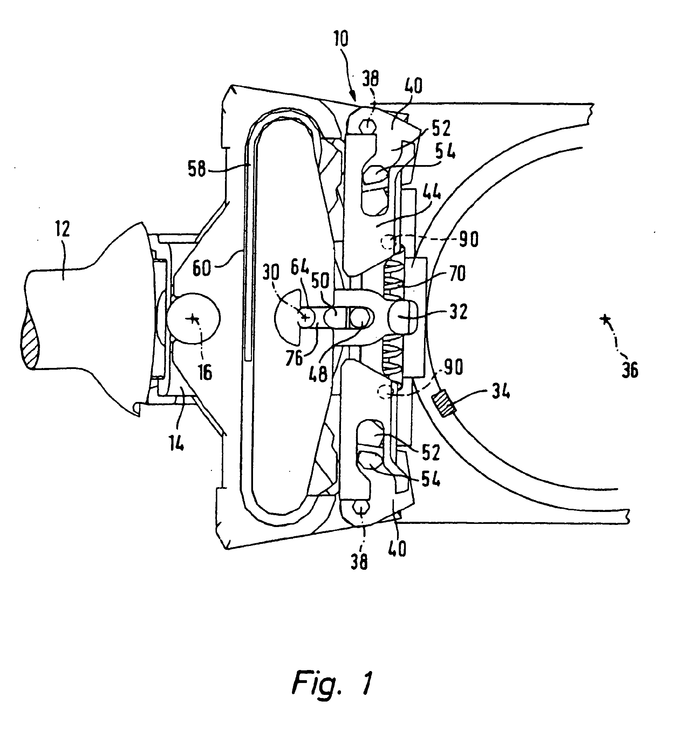

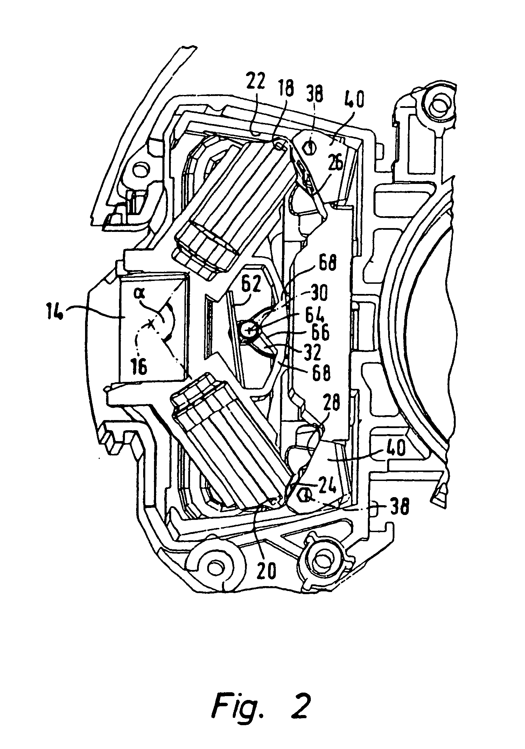

In den Figuren 1 bis 5 ist eine erfindungsgemäße Rückstelleinrichtung 10 zur Rückstellung eines Schalthebels 12 einer Lenkstockschaltvorrichtung dargestellt. In der Figur 1 und 2 ist der Schalthebel 12 beziehungsweise ein mit dem Schalthebel 12 fest verbundener Mitnehmer 14 in der Ausgangsstellung dargestellt. Der Mitnehmer 14 sowie der Schalthebel 12 sind um eine Schwenkachse 16 von der Ausgangsstellung in eine Schaltstellung verschwenkbar. Wie aus der Figur 2 deutlich wird, weist der Mitnehmer 14 zwei Halteabschnitte 18, 20 auf, die entlang je einer Radiuslinie der Schwenkachse 16 gegen jeweils eine gehäuseseitige Anlagekontur 22, 24 wirken. Die Anlagekonturen 22, 24 weisen Rückhaltebereiche 26, 28 auf, in denen die Halteabschnitte 18 in der jeweiligen Schaltstellung rückgehalten werden.

Die Rückstelleinrichtung 10 sieht ferner einen um eine Aüslöseachse 30 auslenkbaren Auslösefinger 32 vor, der von einem lenkradseitigen Nocken 34 in der Schaltstellung betätigbar ist. Der Nocken 34 ist beispielsweise mittel- oder unmittelbar am Lenkrad oder an einer Lenkspindel um eine Lenkspindelachse 36 drehbar angeordnet.

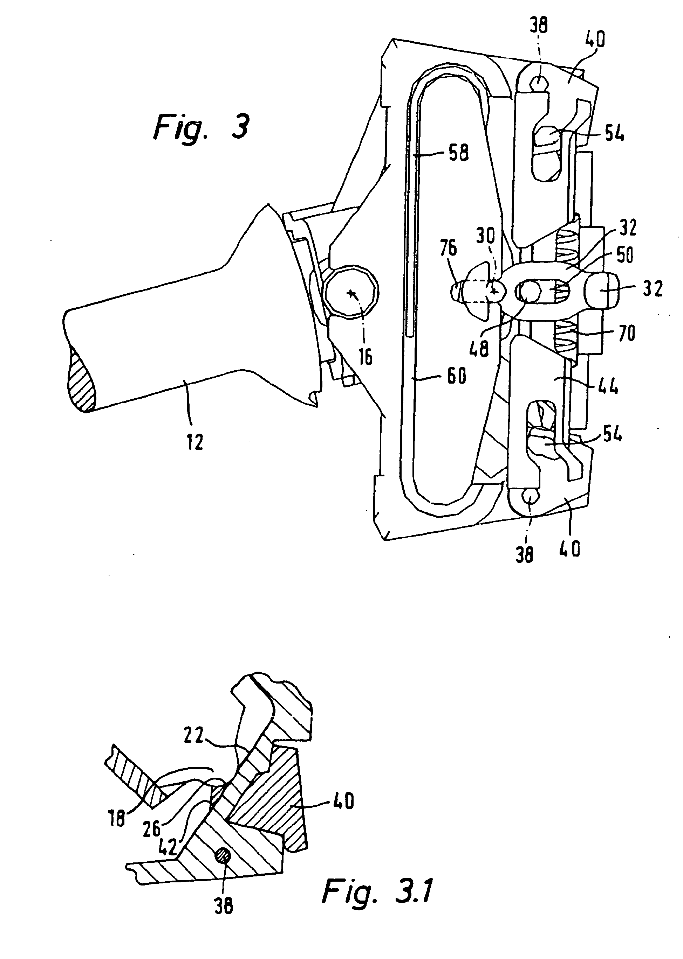

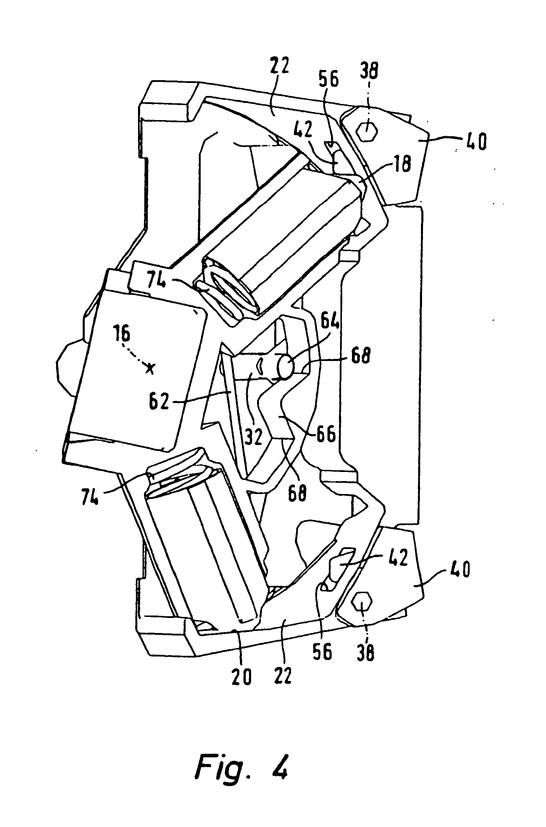

Beim Betätigen des Schalthebels 12 in die in der Figur 3 dargestellten Schaltstellung wandert der Halteabschnitt 18 in den Rückhaltebereich 26. In der Figur 3.1, in der ein Schnitt parallel zur Betrachtungsebene durch die Sperrtüre 42 vergrößert dargestellt ist, ist dies deutlich zu erkennen. Im Rückhaltebereich 26 beziehungsweise 28 wird der Halteabschnitt 18 beziehungsweise 20 von einer um eine Achse 38 verschwenkbaren Sperrtüre 40 gehalten. Der dem Halteabschnitt 18 zugewandte Bereich 42 der Sperrtüre 40 hält den Halteabschnitt 18 und damit den Schalthebel 12 in seiner Schaltstellung, was auch in der Figur 4 deutlich zu erkennen ist.

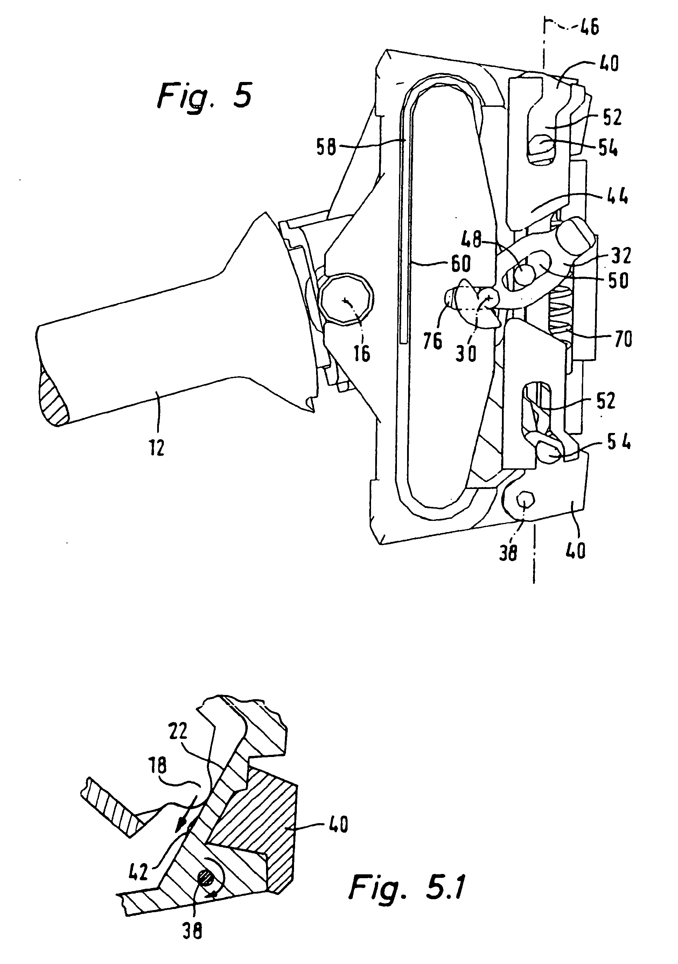

Wird nach dem Betätigen des Schalthebels 12 das Lenkrad beziehungsweise die Lenkspindel rückgedreht, so wirkt der Nocken 34 gegen den Auslösefinger 32, der um seine Auslöseachse 30, wie in der Figur 5 dargestellt, ausgelenkt wird. Der Auslösefinger 32 ist mit einem Schiebeelement 44 gekoppelt, das entlang einer geraden Linie 46 verschiebbar angeordnet ist. Die gerade Linie 46 verläuft senkrecht zur Verbindungslinie der Lenkspindelachse 36 mit der Schwenkachse 16. Das Schiebeelement 44 ist von einer in der Figur 1 gezeigten Mittellage aus in zwei Auslöselagen verschiebbar, wobei in der Figur 5 die eine Auslöselage gezeigt ist. Zur Bewegungskopplung des Auslösefingers 32 mit dem Schiebeelement 44 weist das Schiebeelement ein parallel zur Lenkspindelachse 36 verlaufenden Zapfen 48 auf. Der Zapfen ragt in eine entlang der Längsachse des Auslösefingers 32 verlaufende Längsführung 50. Beim Auslenken des Auslösefingers 32 wird das Schiebeelement 44 folglich über den in der Längsführung 50 angeordneten Zapfen 48 verschoben.

Zur Bewegungskopplung des Schiebeelements 44 mit den beiden Sperrtüren 40 weist das Schiebeelement zwei Kulissenbahnen 52 auf, in die sperrtürenseitige Führungszapfen 54 bewegungsgekoppelt eingreifen. Aufgrund der geknickt ausgebildeten Kulissenbahnen 52 wird erreicht, dass beim Auslenken des Auslösefingers 32 die jeweilige Sperrtüre 40 ausgelenkt wird. Die Sperrtüre 40 wird derart ausgelenkt, dass der Bereich 42 der Sperrtüre 40 den entsprechenden Halteabschnitt 18, 20 freigibt. In der Figur 5.1, die einen der Figur 3.1 entsprechenden Schnitt zeigt, ist dargestellt, dass durch Verschwenken der Sperrtüre 40 um die Achse 38 der Bereich 42 den Halteabschnitt 18 freigibt, so dass eine Rückstellung des Schalthebels 12 bewirkt wird.

Die Bereiche 42 durchgreifen hierbei Aussparungen 56 in den Anlagekonturen 22, was insbesondere in Figur 4 deutlich zu erkennen ist.

Der Auslösefinger 32 ist in der Ausgangsstellung gemäß Figur 1 in einer Rückhaltestellung derart angeordnet, dass er nicht mit dem Nocken 34 in Kontakt kommen kann. Erst bei Betätigen des Schalthebels 12 gelangt der Auslösefinger 32 in eine vorgerückte Position, in der er von dem Nocken 32 ausgelenkt werden kann. Dazu ist der Auslösefinger 32 von einem Federelement in Form eines einfach gebogenen Federstahldrahts 58 hin zur Lenkspindelachse 36 federbeaufschlagt angeordnet. Das eine Ende des Federstahldrahts 16 ist dazu in einer Aufnahmenut 60 angeordnet, wie beispielsweise in Figur 1 oder 3 deutlich zu erkennen ist. Das andere Ende 62 des Federstahldrahts 58, das in Figur 2 deutlich erkennbar ist, beaufschlagt den Auslösefinger 32 in zur Lenkspindelachse 36 gewandter Richtung. Wie ebenfalls aus Figur 2 deutlich wird, liegt die Auslöseachse 30 des Auslösefingers 32 in einem sich parallel zur Lenkspindelachse 36 erstreckenden Zapfenabschnitt 64, der gegen eine V-förmige, mitnehmerseitige Kulisse 66 wirkt. In der Ausgangsstellung befindet sich der Zapfenabschnitt 64 in dem der Lenkspindelachse 36 abgewandten Bereich der Kulisse 66. Beim Betätigen des Schalthebels 12 wird die mitnehmerseitige Kulisse 66 verschwenkt, so dass der Zapfenabschnitt 64 in ein Kulissental 68 wandert, wodurch sich der Auslösefinger in Richtung der Lenkspindelachse 36 bewegen kann. So ist beispielsweise in der Figur 4 deutlich zu erkennen, dass sich der Zapfenabschnitt 64 in der Schaltstellung in einem Kulissental 68 befindet.

Wie insbesondere aus den Figuren 1, 3, 5 deutlich wird, ist der Auslösefinger 32 über seinen Zapfenabschnitt 64 in einer gehäuseseitigen Nut 76 geführt. In der Nut 76 kann der Auslösefinger um seine Schwenkachse 30 durch den Nocken 34 verschwenkt werden.

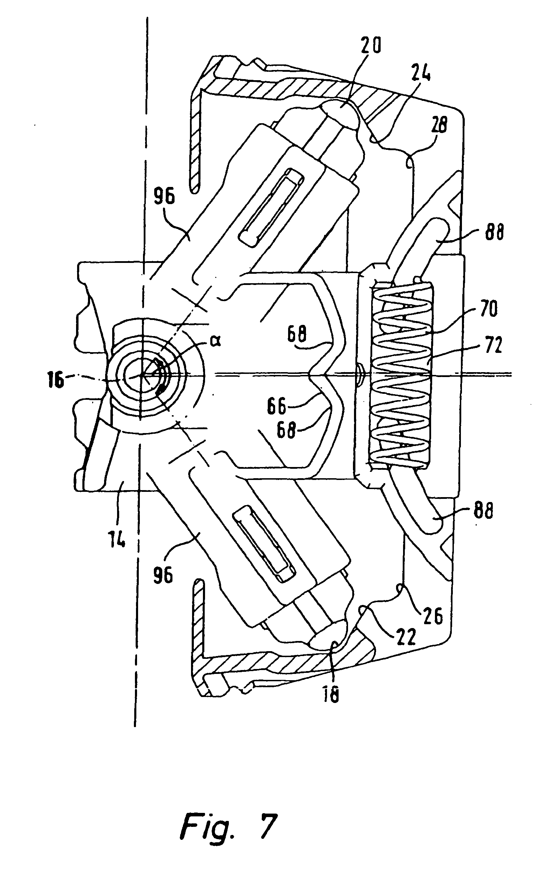

Aus insbesondere den Figuren 1, 3, 5 wird deutlich, dass das Schiebeelement 44 mit einer Ausgleichsfeder in Form einer Schraubenfeder 70 derart gekoppelt ist, dass nach dem Rückstellen des Schalthebels 12 das Schiebelement 44 in die Ausgangslage rückgeführt wird. Dazu umgreift das Schiebeelement 44 die beiden Stirnseiten der Schraubenfeder 70. Die Schraubenfeder 70 ist vorteilhafterweise unter axialer Vorspannung in einer gehäuseseitigen Federaufnahme gehalten. In der Figur 7 ist eine derartige Federaufnahme 72 deutlich zu erkennen.

Die Halteabschnitte 18, 20 wirken jeweils entlang einer Radiuslinie der Schwenkachse 16 gegen die jeweilige Anlagekontur 22, was insbesondere aus Figur 2 deutlich wird. Die beiden Radiuslinien schließen einen Winkel α von cirka 125° ein.

Wie aus Figur 4 deutlich wird, sind die Halteabschnitte 18, 20 mittels Schraubenfedern 74 gegen die Anlagekonturen 22 federbeaufschlagt.

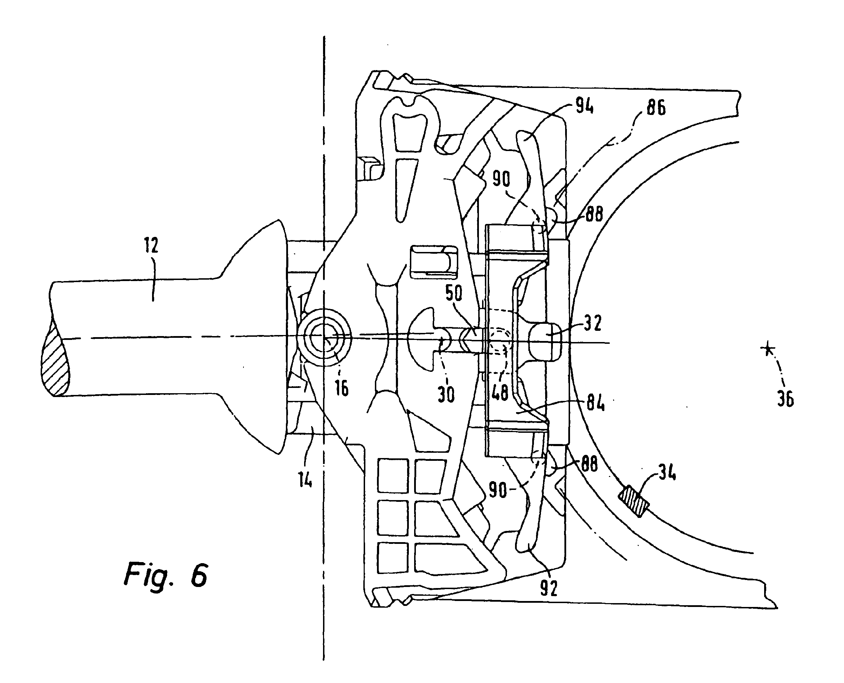

Die in den Figuren 6 bis 10 dargestellte zweite Ausführungsform der Erfindung zeigt eine Rückstelleinrichtung 80, bei der der Rückstelleinrichtung 10 entsprechende Bauteile entsprechende Bezugszahlen tragen. Wesentlicher Unterschied der Rückstelleinrichtung 80 gegenüber der Rückstelleinrichtung 10 ist, dass die Rückstelleinrichtung 80 ein Schiebeelement 84 aufweist, das entlang einer Kreisbahn, die mit dem Bezugszeichen 86 gekennzeichnet ist, um die Lenkspindelachse 36 verschiebbar gelagert ist. Entsprechend der Rückstelleinrichtung 10 weist das Schiebeelement 84 einen Zapfen 48 auf, der in die Längsführung 50 am Auslösefinger 32 eingreift.

Die Figur 7 zeigt einen Schnitt parallel zur Betrachtungsebene durch die Figur 6, in dem die Anlagekonturen 22, 24 sowie die Halteabschnitte 18, 20 des Mitnehmers 14 deutlich zu erkennen sind. Die Anlagekonturen 22, 24 weisen Rückhaltebereiche 26, 28 in Form von Ausbuchtungen auf. In der Figur 7, in der die Ausgangsstellung dargestellt ist, befinden sich die beiden Halteabschnitte 18, 20 in einer Ausgangsstellungausbuchtung.

In Figur 7 ist außerdem die Schraubenfeder 70 deutlich zu erkennen, die in der Federaufnahme 72 vorgespannt angeordnet ist. Im Bereich der Stirnseiten der Federaufnahme 72 sind radial um die Lenkspindelachse 36 verlaufende Führungsnutabschnitte 88 vorgesehen. In die beiden Führungsnutabschnitte 88 ragt jeweils ein in der Figur 7 nicht dargestellter Führungszapfen 90 des Schiebeelements 84. Aufgrund der in die Führungsabschnitte 88 ragenden Führungszapfen 90 wird das Schiebeelement entlang der Kreisbahn 86 um die Lenkspindelachse 36 verschiebbar geführt. Die Führungszapfen sind außerdem so angeordnet, dass sie beim Auslenken des Schiebeelements 84 die freien Stirnseiten der Schraubenfeder 70 beaufschlagen. Dadurch wird erreicht, dass das Schiebeelement nach Rückstellung des Schalthebels 12 in seine mittige, in der Figur 6 dargestellte, Ausgangslage zurückbewegt wird.

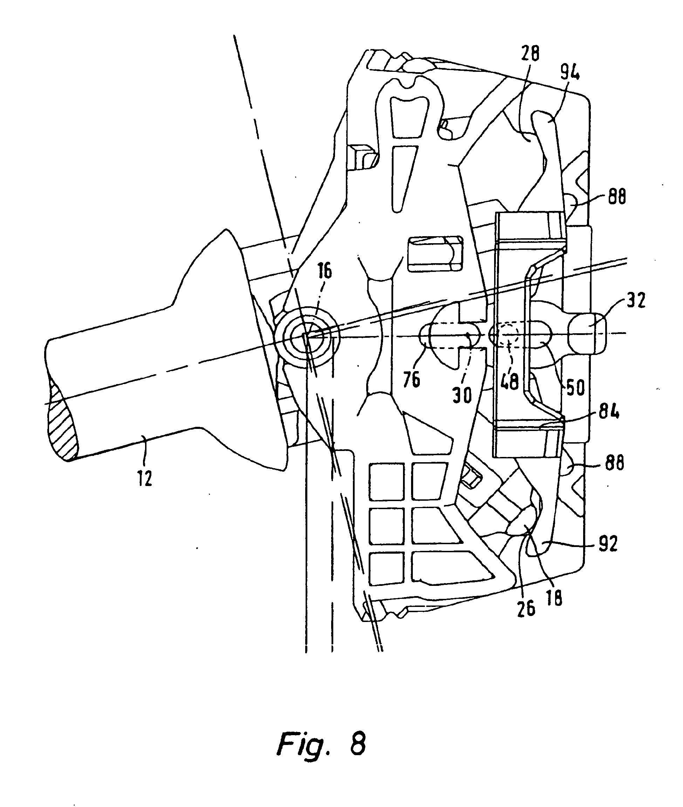

Figur 8 zeigt die Schaltstellung des Schalthebels 12. Aufgrund der in der Figur 7 deutlich zu erkennenden Kulisse 66 ragt in der Schaltstellung gemäß Figur 8 der Auslösefinger 32 in radialer Richtung hin zur Schwenkachse 36, so dass der Nocken 34 beim Rückdrehen des Lenkrades den Auslösefinger 32 betätigt. In der Figur 8 ist deutlich zu erkennen, dass der Halteabschnitt 18 in dem Rückhaltebereich 26 angeordnet ist. Ferner ist zu erkennen, dass die freien Enden 92, 94 des Schiebeelements 84 im Bereich der Rückhaltebereiche 26, 28 liegen.

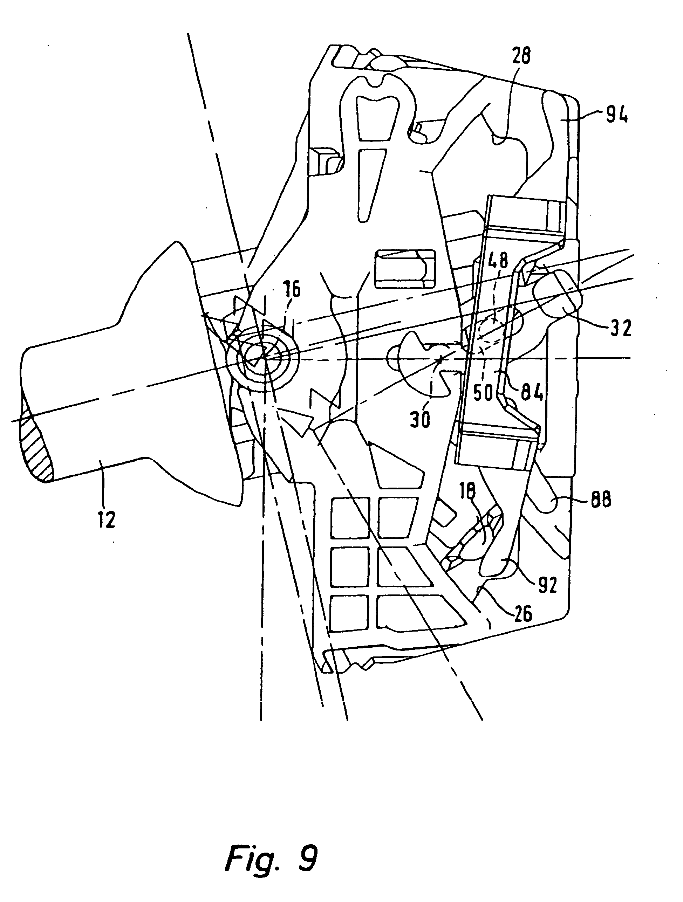

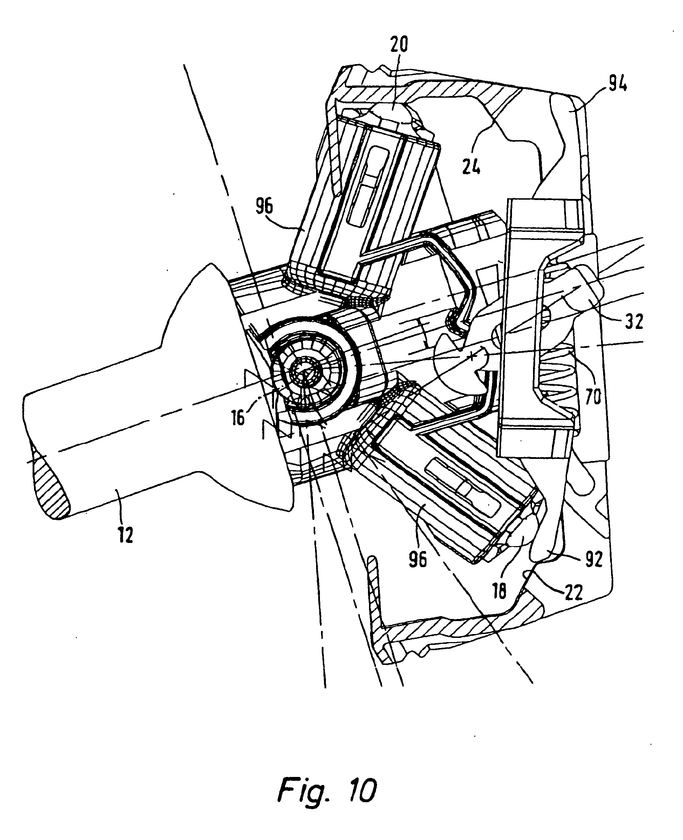

Wird nun der Auslösefinger 32, wie in der Figur 9 dargestellt, von dem Nocken 34 ausgelenkt, so wird aufgrund der Bewegungskopplung des Nockens 32 mit dem Schiebeelement 84, das Schiebeelement 84 auf der Kreisbahn 86 entsprechend verfahren. Dabei hebt das Ende 92 des Schiebeelements 84 den Halteabschnitt 18 aus dem Rückhaltebereich 26 heraus. Der Schalthebel 12 gelangt dadurch in seine Ausgangslage zurück. In der Auslöselage gehen die Enden 92, 94 des Schiebeelements 84 vorteilhafterweise weitgehend tangential an die jeweilige Anlagekontur 22, 24 über. Entsprechendes ist in Figur 10 deutlich zu erkennen, in der ein parallel zur Betrachtungsebene verlaufender Schnitt durch die Figur 9 gezeigt ist.

Dass der Schalthebel 12 beim Herausheben des Halteabschnitts 18 aus dem Rückhaltebereich 26 in seine Ausgangsstellung zurückschwenkt, wird insbesondere durch die Federbeaufschlagung des Halteabschnitts 20 gegen die entsprechende Anlagekontur 24 bewirkt. Entsprechend der Rückstelleinrichtung 10 sind die Halteabschnitte 18, 20 der Rückstelleinrichtung 80 in Führungshülsen 96 untergebracht und mittels nicht dargestellten, in den Führungshülsen 96 vorhandenen Schraubenfedern gegen die jeweilige Anlagekontur 22, 24 federbeaufschlagt.

Beim Rückstellen des Schalthebels 12 in seine Ausgangslage wird der Auslösefinger 32 durch die Schraubenfeder 70 ebenfalls in seine mittige, der Lenkspindelachse 36 fern gelegene Ausgangsposition rückgeführt.

## Patentansprüche

1. Rückstelleinrichtung (10, 80) zur Rückstellung eines Blinkerschalthebels (12) einer Lenkstockschaltervorrichtung von einer Schaltstellung in eine Ausgangstellung, mit einem schalthebelseitigen, um eine Schwenkachse (16) verschwenkbaren, Halteabschnitte (18, 20) aufweisenden Mitnehmer (14), mit wenigstens einer mit den Halteabschnitten (18, 20) zusammenwirkenden, gehäuseseitigen Anlagekontur (22, 24), wobei die Anlagekontur (22, 24) Rückhaltebereiche (26, 28) für die Halteabschnitte ((18, 20) aufweist, mit Rückstellmitteln, die zur Rückstellung des Schalthebels (12) den jeweiligen Halteabschnitt (18, 20) aus dem jeweiligen Rückhaltebereich (26, 28) auslösen, und mit einem um eine Auslöseachse (30) auslenkbaren Auslösefinger (32), der von einem lenkradseitigen Nocken (34) betätigbar ist und die Rückstellmittel betätigt, **dadurch gekennzeichnet, dass** die Rückstellmittel ein mit dem Auslösefinger (32) gekoppeltes, von einer Mittellage aus in zwei Auslöselagen verschiebbar angeordnetes Schiebeelement (44, 84) umfassen, das in der einen Auslöselage den einen und in der anderen Auslöselage den anderen Halteabschnitt (18, 20) aus dem jeweiligen Rückhaltebereich (26, 28) auslöst.

2. Rückstelleinrichtung (10, 80) nach Anspruch 1, **dadurch gekennzeichnet, dass** die verschiebung des Schiebeelements (44, 84) in die zwei Auslöselagen wenigstens weitgehend senkrecht zu einer die Schwenkachse (16) schneidenden Radiuslinie der Lenkspindelachse (36) erfolgt.

3. Rückstelleinrichtung (10, 80) nach Anspruch 1 oder 2, **dadurch gekennzeichnet, dass** der Auslösefinger (32) eine entlang seiner Längsachse verlaufende, mittig angeordnete Längsführung (50) aufweist, in die ein schiebeelementseitiger Zapfen (48) ragt.

4. Rückstelleinrichtung(10, 80) nach einem der vorhergehenden Ansprüche, **dadurch gekennzeichnet, dass** der Auslösefinger (32) durch ein Federelement (58) in zur Lenkspindelachse (36) radialer Richtung federbeaufschlagt so angeordnet ist, dass der Auslösefinger (32) gegenüber dem Zapfen entlang seiner Längsachse verschiebbar ist.

5. Rückstelleinrichtung (10, 80) nach Anspruch 4, **dadurch gekennzeichnet, dass** das Federelement (58) als einfach gebogenes Federstahlband oder als einfach gebogener Federstahldraht ausgebildet ist.

6. Rückstelleinrichtung (10, 80) nach Anspruch 4 oder 5, **dadurch gekennzeichnet, dass** das dem Federelement (58) zugewandte Ende (64) des Auslösefingers in einer gehäuseseitigen Nut (76) geführt wird.

7. Rückstelleinrichtung (10, 80) nach einem der vorhergehenden Ansprüche, **dadurch gekennzeichnet, dass** das Schiebeelement (44, 84) mit einer Ausgleichsfeder (70) gekoppelt ist, die nach dem Rückstellen des Schalthebels (12) das Schiebeelement (44, 84) in die Ausgangslage rückführt.

8. Rückstelleinrichtung (10, 80) nach Anspruch 7, **dadurch gekennzeichnet, dass** die Ausgleichsfeder in Form einer Schraubenfeder (70) ausgebildet ist, die unter axialer Vorspannung in einer gehäuseseitigen Federaufnahme (72) gehalten wird, wobei das Schiebeelement (44, 84) zwei die Stirnseiten der Schraubenfeder (70) über- und/oder umgreifende Federanlageabschnitte (90) aufweist.

9. Rückstelleinrichtung (10) nach einem der vorhergehenden Ansprüche, **dadurch gekennzeichnet, dass** das Schiebeelement (44) entlang einer geraden Linie (46) verschiebbar angeordnet ist, wobei die gerade Linie (46) senkrecht zur Verbindungslinie der Lenkspindelachse (36) mit der Schwenkachse (16) verläuft.

10. Rückstelleinrichtung (80) nach einem der Ansprüche 1 bis 8, **dadurch gekennzeichnet, dass** das Schiebeelement (84) entlang einer Kreisbahn (86) verschiebbar angeordnet ist, wobei der Mittelpunkt der Kreisbahn (86) im Bereich der Lenkspindelachse oder auf einer Radiuslinie der Lenkspindelachse (36) im Bereich zwischen der Lenkspindelachse (36) und dem Schiebelement (84) liegt.

11. Rückstelleinrichtung (80) nach einem der vorhergehenden Ansprüche, **dadurch gekennzeichnet, dass** das Schiebeelement (84) zum Auslösen des jeweiligen Halteabschnitts unmittelbar gegen den jeweiligen Halteabschnitt wirkt.

12. Rückstelleinrichtung (80) nach Anspruch 11, **dadurch gekennzeichnet, dass** die Rückhaltebereiche (26, 28) der Anlagekontur (22, 24) in Form von Rückhalteausbuchtungen ausgebildet sind und dass das Schiebeelement (84) den jeweiligen Halteabschnitt (18, 20) aus der jeweiligen Rückhalteausbuchtung heraushebt.

13. Rückstelleinrichtung (80) nach Anspruch 12, **dadurch gekennzeichnet, dass** die Abschnitte (92, 94) des Schiebeelements (84), die den jeweiligen Halteabschnitt (18, 20) aus der jeweiligen Rückhalteausbuchtung (26, 28) herausheben, in der Auslöselage wenigstens weitgehend tangential an die Anlagekontur (22, 24) angrenzen und/oder tangential in die Anlagekontur (22, 24) übergehen.

14. Rückstelleinrichtung(10) nach einem der Ansprüche 1 bis 10, **dadurch gekennzeichnet, dass** das Schiebeelement (44) zum Auslösen des jeweiligen Halteabschnitts (18, 20) unmittelbar gegen eine den jeweiligen Halteabschnitt (18, 20) im jeweiligen Rückhaltebereich (26, 28) haltende Sperrtüre (40) wirkt und diese auslenkt.

15. Rückstelleinrichtung (10) nach Anspruch 14, **dadurch gekennzeichnet, dass** das Schiebeelement (44) mit den Sperrtüren (40) über schiebeelementseitige Kulissenbahnen (52) und sperrtürenseitige, in den Kulissenbahnen (52) laufenden Führungszapfen (54) bewegungsgekoppelt sind.

16. Rückstelleinrichtung (10) nach Anspruch 15, **dadurch gekennzeichnet, dass** die Längsachse der jeweiligen Kulissenbahn (52) derart geknickt verläuft, dass der Führungszapfen (54) der jeweiligen Sperrtüre (40) in der Auslöselage die jeweilige Sperrtüre (40) auslenkt.

17. Rückstelleinrichtung (10, 80) nach einem der vorhergehenden Ansprüche, **dadurch gekennzeichnet, dass** die Halteabschnitte (18, 20) entlang je einer Radiuslinie der Schwenkachse (16) gegen die jeweilige Anlagekontur (22, 24) federbeaufschlagt wirken, wobei diese beiden Radiuslinien einen Winkel (α) von cirka 90° bis 135° einschließen.

## Claims

1. A return device (10, 80) for returning a turn signal lever (12) of a steering column switch device from a shifted position to an outset position, having a slaving means (14), toward the turn signal lever, that is pivotable about a pivot axis (16) and has retention portions (18, 20); having at least one bearing contour (22, 24) on the housing, cooperating with the retention portions (18, 20), and the bearing contour (22, 24) has restraint regions (26, 28) for the retention portions (18, 20); having return means, which for returning the turn signal lever (12) release the applicable retention portion (18, 20) from the applicable restraint region (26, 28); and having a release prong (32), which is pivotable about a release axis (30) and is actuatable by a cam (34) on the steering wheel and actuates the return means, **characterized in that** the return means include a slide element (44, 84), which is coupled to the release prong (32) and disposed so as to be displaceable from a central position into two release positions, and which in one release position releases one, and in the other release position releases the other, of the retention portions (18, 20) from the respective restraint region (26, 28).

2. The return device (10, 80) as defined by claim 1, **characterized in that** the displacement of the slide element (44, 84) into the two release positions is effected at least largely perpendicular to a radius line of a steering spindle axis (36), which line intersects the pivot axis (16).

3. The return device (10, 80) as defined by claim 1 or 2, **characterized in that** the release prong (32) has a centrally disposed longitudinal guide (50), extending along its longitudinal axis, into which guide a peg (48) on the slide element protrudes.

4. The return device (10, 80) as defined by one of the foregoing claims, **characterized in that** the release prong (32), acted upon by a spring element (58) in the direction radial to the steering spindle axis (36), is disposed such that the release prong (32) is displaceable relative to the peg along its longitudinal axis.

5. The return device (10, 80) as defined by claim 4, **characterized in that** the spring element (58) is embodied as a singly bent spring steel band or as a singly bent spring steel wire.

6. The return device (10, 80) as defined by claim 4 or 5, **characterized in that** the end (64) of the release prong oriented toward the spring element (58) is guided in a groove (76) on the housing.

7. The return device (10, 80) as defined by one of the foregoing claims, **characterized in that** the slide element (44, 84) is coupled to a compensation spring (70), which after the return of the turn signal lever (12) returns the slide element (44, 84) to its outset position.

8. The return device (10, 80) as defined by claim 7, **characterized in that** the compensation spring is embodied in the form of a helical spring (70), which is kept under axial initial tension in a spring receptacle (72) on the housing, and the slide element (44, 84) has two spring bearing portions (90) that fit over and/or around the face ends of the helical spring (70).

9. The return device (10) as defined by one of the foregoing claims, **characterized in that** the slide element (44) is located displaceably along a straight line (46), and the straight line (46) extends perpendicular to the line connecting the steering spindle axis (36) to the pivot axis (16).

10. The return device (80) as defined by one of claims 1 through 8, **characterized in that** the slide element (84) is disposed displaceably along a circular path (86), and the center point of the circular path (86) is located in the region of the steering spindle axis or on a radius line of the steering spindle axis (36), in the region between the steering spindle axis (36) and the slide element (84).

11. The return device (80) as defined by one of the foregoing claims, **characterized in that** the slide element (84) acts to release the respective retention portion directly counter to the respective retention portion.

12. The return device (80) as defined by claim 11, **characterized in that** the restraint regions (26, 28) of the bearing contour (22, 24) are embodied in the form of restraint recesses; and that the slide element (84) lifts the respective retention portion (18, 20) from the respective restraint recess.

13. The return device (80) as defined by claim 12, **characterized in that** in the release position, the portions (92, 94) of the slide element (84) which lift the respective retention portion (18, 20) from the respective restraint recess (26, 28) border on the bearing contour (22, 24) at least largely at a tangent and/or change over tangentially to the bearing contour (22, 24).

14. The return device (10) as defined by one of claims 1 through 10, **characterized in that** the slide element (44), for releasing the respective retention portion (18, 20), acts directly against a stop gate (40) that retains the respective retention portion (18, 20) in the respective restraint region (26, 28), and deflects this stop gate.

15. The return device (10) as defined by claim 14, **characterized in that** the slide element (44) is motion- coupled to the stop gates (40) via sliding-block tracks (52) on the slide element and guide pegs (54) on the stop gate that extend in the sliding-block tracks (52).

16. The return device (10) as defined by claim 15, **characterized in that** the longitudinal axis of the respective sliding-block track (52) extends in kinked fashion, such that in the release position, the guide peg (54) of the respective stop gate (40) deflects the that stop gate (40).

17. The return device (10, 80) as defined by one of the foregoing claims, **characterized in that** the retention portions (18, 20), acted upon by a spring, each act counter to the respective bearing contour (22, 24) along a radius line of the pivot axis (16), and these radius lines form an angle (α) of approximately 90° to 135°.

## Revendications

1. Mécanisme de rappel (10, 80) pour le rappel d'une position de commutation dans une position initiale, d'un levier de clignotant (12) d'un commutateur de colonne de direction, avec un entraîneur (14) comportant des parties de maintien (18, 20) pouvant pivoter autour d'un axe de pivotement (16), avec au moins un profilé d'appui (22, 24) côté carter, coopérant avec les parties de maintien (18, 20), ledit profilé d'appui (22, 24) présentant des zones de retenue (26, 28) pour les parties de maintien (18, 20), avec des moyens de retenue qui pour le rappel du levier de commande (12), déclenchent la partie de maintien concernée (18, 20) de la zone de retenue (26, 28) concernée, et avec un doigt de déclenchement (32) pouvant être dévié autour d'un axe de déclenchement (30) actionnable par un ergot (34) côté volant, **caractérisé en ce que** les moyens de rappel comprennent un élément coulissant (44, 84), agencé de manière déplaçable d'une position médiane dans deux positions de déclenchement, couplé au doigt de déclenchement (32), qui déclenche l'une des parties de maintien (18,20) de la zone de retenue (26, 28) concernée dans l'une des positions de déclenchement et l'autre partie de maintien dans l'autre position de déclenchement.

2. Mécanisme de rappel (10, 80) selon la revendication 1, **caractérisé en ce que** le déplacement de l'élément coulissant (44, 84) dans les deux positions de déclenchement est au moins quasi-perpendiculaire à une ligne radiale de l'axe de l'arbre de direction (36) coupant l'axe de pivotement (16).

3. Mécanisme de rappel (10, 80) selon l'une quelconque des revendications 1 ou 2, **caractérisé en ce que** le doigt de déclenchement (32) comprend un guidage longitudinal (50) s'étendant de manière centrée le long de son axe longitudinal, dans lequel un tenon (48) fait saillie côté élément coulissant.

4. Mécanisme de rappel (10, 80) selon l'une quelconque des revendications précédentes, **caractérisé en ce que** le doigt de déclenchement (32) est positionné par un élément à ressort (58) commandé par un ressort, dans une direction radiale par rapport à l'axe de l'arbre de direction (36) de telle sorte que le doigt de déclenchement (32) puisse être déplacé le long de son axe longitudinal face au tenon.

5. Mécanisme de rappel (10, 80) selon la revendication 4, **caractérisé en ce que** l'élément à ressort (58) est conçu comme une bande d'acier flexible simplement cintrée ou d'un fil d'acier élastique simplement cintré.

6. Mécanisme de rappel (10, 80) selon l'une quelconque des revendications 4 ou 5, **caractérisé en ce que** l'extrémité (64) du doigt de déclenchement tournée vers l'élément à ressort (58) est guidée dans une rainure (76) côté carter.

7. Mécanisme de rappel (10, 80) selon l'une quelconque des revendications précédentes, **caractérisé en ce que** l'élément coulissant (44, 84) est couplé à un ressort de compensation (70) qui ramène l'élément coulissant (44, 84) en position initiale après rappel du levier de commande (12).

8. Mécanisme de rappel (10, 80) selon la revendication 7, **caractérisé en ce que** le ressort de compensation est réalisé sous la forme d'un ressort hélicoïdal (70) qui est maintenu sous précontrainte axiale dans un logement de ressort (72) côté carter, l'élément coulissant (44, 84) comportant deux parties d'appui du ressort (90) recouvrant et/ou entourant les faces frontales du ressort hélicoïdal (70).

9. Mécanisme de rappel (10) selon l'une quelconque des revendications précédentes, **caractérisé en ce que** l'élément coulissant (44) est disposé de manière déplaçable le long d'une ligne droite (46), ladite ligne droite (46) s'étendant perpendiculairement à la ligne de jonction de l'axe de l'arbre de direction (36) et de l'axe de pivotement (16).

10. Mécanisme de rappel (80) selon l'une quelconque des revendications 1 à 8, **caractérisé en ce que** l'élément coulissant (84) est logé le long d'une voie circulaire (86) de manière déplaçable, le centre de la voie circulaire (86) étant situé dans la zone de l'axe de l'arbre de direction ou sur une ligne radiale de l'axe de l'arbre de direction (36) dans la zone entre l'axe de l'arbre de direction (36) et l'élément coulissant (84).

11. Mécanisme de rappel (80) selon l'une quelconque des revendications précédentes, **caractérisé en ce que** l'élément coulissant (84) agit directement contre la partie de maintien concernée pour déclencher la partie de maintien concernée.

12. Mécanisme de rappel (80) selon la revendication 11, **caractérisé en ce que** les zones de retenue (26, 28) du profilé d'appui (22, 24) sont réalisées sous forme de renflement de retenue et **en ce que** l'élément coulissant (84) soulève la partie de maintien (18, 20) concernée hors du renflement de retenue concerné.

13. Mécanisme de rappel (80) selon la revendication 12, **caractérisé en ce que** en position de déclenchement, les parties (92, 94) de l'élément coulissant (84) soulevant la partie de maintien (18, 20) concernée hors du renflement de retenue (26, 28) concerné sont au moins adjacentes quasi-tangentiellement au profilé d'appui (22, 24) et/ou s'intègrent tangentiellement dans le profilé d'appui (22, 24).

14. Mécanisme de rappel (10) selon l'une quelconque des revendications 1 à 10, **caractérisé en ce que** l'élément coulissant (44) pour le déclenchement de la partie de maintien (18, 20) concernée agit directement contre une porte de blocage (40) tenant la partie de maintien (18, 20) concernée dans la zone de retenue (26, 28) concernée et dévie ladite porte.

15. Mécanisme de rappel (10) selon la revendication 14, **caractérisé en ce que** l'élément coulissant (44) est couplé en mouvement avec les portes de blocage (40) par des tenons de guidage (54) passant au-dessus des voies de coulissement (52) côté élément coulissant et dans les voies de coulissement (52) côté portes de blocage.

16. Mécanisme de rappel (10) selon la revendication 15, **caractérisé en ce que** l'axe longitudinal de chaque voie de coulissement (52) est coudé de sorte que le tenon de guidage (54) de la porte de blocage (40) concernée dévie ladite porte de blocage (40) concernée en position de déclenchement.

17. Mécanisme de rappel (10, 80) selon l'une quelconque des revendications précédentes, **caractérisé en ce que** les parties de maintien (18, 20) agissent commandées par ressort contre le profilé d'appui (22, 24), le long d'une ligne radiale de l'axe de pivotement (16), ces deux lignes radiales formant un angle (α) d'environ 90° à 135°.
